# EUROPEAN PATENT SPECIFICATION

(11) **EP 1 900 475 B1**
(45) Date of publication and mention of the grant of the patent: **11.11.2009**
(21) Application number: 07017676.3
(22) Date of filing: 10.09.2007
(51) Int. Cl.: B23Q 5/04, B23Q 16/02

(54) **Belt type tool turret**
Werkzeugrevolver mit Riemen
Tourelle porte-outil à courroies

(30) Priority: 13.09.2006 KR 20060088594
(43) Date of publication of application: 19.03.2008
(73) Proprietor: EWS Korea Co., Ltd., Changwon-city Kyoungnam-do (KR)
(72) Inventor: Park, Joong-han, Kimhae-city Kyoungnam-do (KR)
(74) Representative: HOFFMANN EITLE

(56) References cited:
- EP-A- 1 287 931
- JP-A- 6 000 743

## Description

### BACKGROUND OF THE INVENTION

### Field of the Invention

The present invention relates to a tool turret, more particularly, to a belt type tool turret, in which a single motor is employed to drive a rotating tool and replace the tool to modify the power transfer system and to selectively perform the rotating tool drive and the tool replacement, and the power transfer system is formed of a belt to avoid noises caused by gear contacts and facilitate the assembling procedures (see, for example, JP-06000743-A).

### Background Art

A conventional tool turret requires many gears for transferring the motor power to a rotating tool or disk. In particular, a circular motor type tool turret has a peculiar construction. That is, the motor power is configured to be transferred by means of selective gear engagement being caused by reciprocation of a gear shaft, thereby inevitably generating much noise by gear contacts.

In addition, for the purposes of firm and solid engagement between gears and reduced noises, the distance between the gears is repeatedly confirmed during assembling, thereby resulting in an increase in the assembling cost and time.

### SUMMARY OF THE INVENTION

Accordingly, the present invention has been made to solve the above-mentioned problems occurring in the prior arts, and it is an object of the present invention to provide a tool turret, in which the power transfer is carried out through a belt, thereby reducing noise of the tool turret and save the assembling time and cost.

Another object of the invention is to provide a tool turret, in which, instead of a pinion gear used in the conventional circular motor type tool turret, a spline shaft having a spline is formed to thereby enable to transfer the power in more smooth way.

To accomplish the above objects, according to the present invention, there is provided a belt type tool turret. The belt type tool turret comprises: a motor for generating a driving force and having a motor shaft formed therein; a center pulley 30 connected to the motor shaft; a pulley a which is connected with the center pulley by means of a belt a and to which the motor power is transferred; a drive shaft a rotatably coupled to the pulley a; a first eccentric housing formed at the outside of the drive shaft a so as to have a certain degree of eccentricity; a pulley b coupled to one side of the drive shaft a; a pulley c connected with the pulley b through a belt b to transfer a power, the pulley c having a spline formed therein; a pulley d formed at one side of the pulley c and having a spline formed therein; a spline shaft adapted to pass through the pulley c and the pulley d to enable a reciprocal movement; a piston and a cylinder for carrying out the reciprocal movement of the spline shaft; an indexing spindle pivoted by the spline shaft having a pinion gear formed therein; a second eccentric housing formed at the outside of the indexing spindle so as to have a certain degree of eccentricity; a tool replacement driver unit for transferring the power transferred to the indexing spindle to a disk; a pulley e for transferring a power transferred to the pulley d to a timing belt; a shaft coupled to the pulley e by means of a locking element; and a rotating tool driver unit for transferring a power transferred to the shaft to a rotating tool.

Preferably, the tool replacement driver unit is configured to transfer a driving power to the disk for the purpose of tool-replacement, except that the power generated from the motor is transferred to the rotating tool driver unit in the same manner. The tool replacement driver unit includes a pivotable curvic coupling gear-engaged with a pinion gear and to which a power is transferred, a disk flange fixedly coupled to the pivotable curvic coupling by means of a bolt, a disk fixedly coupled to the disk flange by means of another bolt, and a fixing curvic coupling and a piston curvic coupling to prevent the disk from rotating.
Preferably, the rotating tool driver unit is configured to transfer a driving power to a rotating tool for the purpose of driving the rotating tool, except that the power generated from the motor is transferred to the tool replacement driver unit in the same way. The rotating tool driver unit includes a socket coupled to a key groove of a shaft, a bevel gear a coupled to the socket by means of a bolt, a bevel gear b pairing with the bevel gear a, a drive shaft b installed by passing through the bevel gear b, and a tool driving shaft for receiving a power by the drive shaft b and transferring the power to a rotating tool.
Preferably, the engagement between the pivotable curvic coupling and the pinion gear is adjusted using the second eccentric housing, the tension of the belt b is adjusted using first eccentric housing, and the tension of the belt a is adjusted by adjusting the position of a motor bracket.
Preferably, the pulley a is formed in the motor shaft formed in the motor and the drive shaft a to transfer the power by means of the belt a, another pulley b is formed at the other side of the drive shaft a, the pulley c receives the power from the pulley b through the belt b, the pulley d for transferring the power to the shaft for tool driving is formed at one side of the pulley c, the internal spline is formed in the indexing spindle formed at one side of the pulley d, the spline shaft reciprocates along the pulley c, the pulley d and the spline formed inside of the indexing spindle, and the power is transferred or interrupted by means of forward and backward reciprocal movement of the spline shaft.

Preferably, when the spline shaft advances to be tooth-engaged to the spline formed in the indexing spindle, a tool replacing state is obtained. When the spline shaft retracts to be tooth-engaged to the spline formed in the pulley d, a tool driving state is obtained.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 illustrates a belt type turret according to an embodiment of the invention;

FIGS. 2 and 3 are partially enlarged views of FIG. 1;

FIG. 4 is a partially enlarged view of FIG. 1 where the spline shaft is advanced and tooth-engaged with an indexing spindle, according to the invention; and

FIG. 5 is a partially enlarged view of FIG. 1 where the spline shaft is retracted and tooth-engaged with a pulley d, according to the invention.

### DETAILED DESCRIPTION OF THE PREFERRED EMBODIMENT

Reference will be now made in detail to the preferred embodiment of the present invention with reference to the attached drawings.

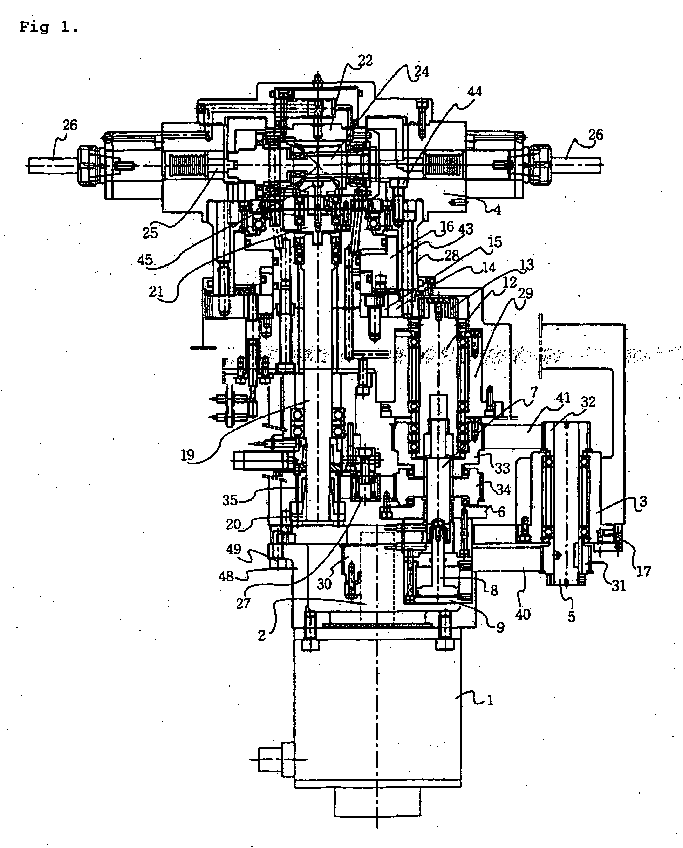

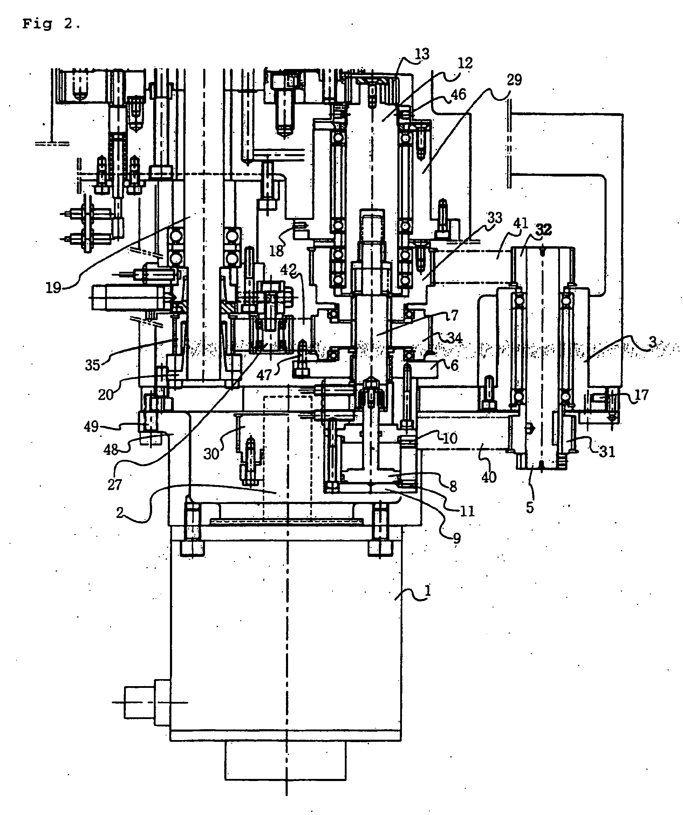

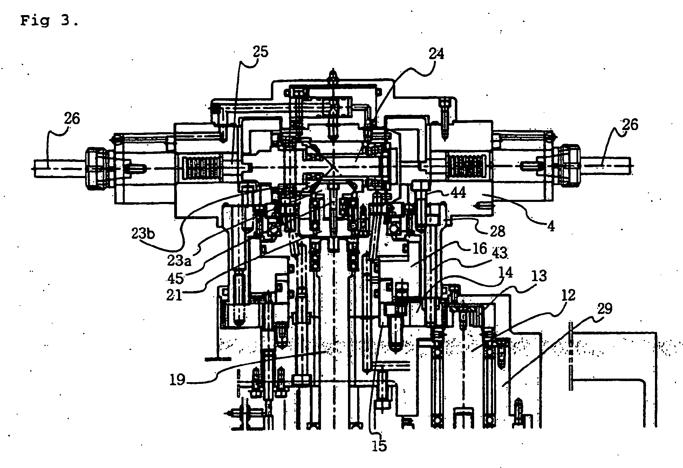

First, FIG. 1 illustrates a belt type turret according to an embodiment of the invention, and FIGS. 2 and 3 are partially enlarged views of FIG. 1. The belt type tool turret according to the invention includes a motor 1 for generating a driving force and having a motor shaft 2 formed therein; a center pulley 30 connected to the motor shaft 2, a pulley a 31 which is connected with the center pulley 30 by means of a belt a 40 and to which the motor 1 power is transferred, a drive shaft a 5 rotatably coupled to the pulley a 31, a first eccentric housing 3 formed at the outside of the drive shaft a 5 so as to have a certain degree of eccentricity, a pulley b 32 coupled to one side of the drive shaft a 5, a pulley c 33 connected with the pulley b 32 through a belt b 41 to transfer a power, the pulley c having a spline formed therein, a pulley d 34 formed at one side of the pulley c 33 and having a spline formed therein, a spline shaft 7 adapted to pass through the pulley c 33 and the pulley d 34 to enable a reciprocal movement, a piston 8 and a cylinder 9 for carrying out the reciprocal movement of the spline shaft 7, an indexing spindle 12 pivoted by the spline shaft 7 having a pinion gear 13 formed therein, a second eccentric housing 29 formed at the outside of the indexing spindle 12 so as to have a certain degree of eccentricity, a tool replacement driver unit for transferring the power transferred to the indexing spindle 12 to a disk 4, a pulley e 35 for transferring a power transferred to the pulley d 34 to a timing belt 42, a shaft 19 coupled to the pulley e 35 by means of a locking element 20, and a rotating tool driver unit for transferring a power transferred to the shaft 19 to a rotating tool 26.

Here, the tool replacement driver unit is configured to transfer a driving power to the disk 4 for the purpose of tool-replacement, except that the power generated from the motor 1 is transferred to the rotating tool driver unit 60 in the same manner. The tool replacement driver unit includes a pivotable curvic coupling 14 which is gear-engaged with a pinion gear 13 for and to which a power is transferred, a disk flange 28 fixedly coupled to the pivotable curvic coupling 14 by means of a bolt 43, a disk 4 fixedly coupled to the disk flange 28 by means of another bolt 44, and a fixing curvic coupling 15 and a piston curvic coupling 16 for fixing the disk 4 so as not to rotate.

Similar to the tool replacement driver unit, the rotating tool driver unit is configured to transfer a driving power to a rotating tool 26 for the purpose of driving the rotating tool 26, except that the power generated from the motor 1 is transferred to the tool replacement driver unit in the same way. The rotating tool driver unit includes a socket 21 coupled to a key groove of a shaft 19, a bevel gear a 23a coupled to the socket 21 by means of a bolt 45, a bevel gear b 23b pairing with the bevel gear a 23a, a drive shaft b 24 installed by passing through the bevel gear b 23b, and a tool driving shaft 25 for receiving a power by the drive shaft b 24 and transferring the power to a rotating tool 26.

Combinational relationships among the respective elements and their features will be explained in details. The eccentric housing 3 is eccentrically formed with a certain degree of eccentricity with respect to the absolute center line. A plurality of bearings (not indicated by reference numerals) is formed inside of the eccentric housing 3, into which a drive shaft a 5 is inserted to contact the bearing to rotate.

In addition, another eccentric housing 29 is also eccentrically formed with a certain degree of eccentricity with respect to the absolute center line. A plurality of bearings (not indicated by reference numerals) is formed inside of the eccentric housing 29, where an indexing spindle 12 is formed and contacts the bearing to rotate.

The tool turret according to the invention requires a distance adjustment between gears by which a power is transferred, during assembling, in order to reduce noises. A change in the distance between rotating shafts, caused by the distance adjustment, is nullified by tension adjustment of belts.

That is, a distance adjustment between the pinion gear 13 and the pivotable curvic coupling 14 is carried out by fixing the eccentric housing 29 in an optimum position while turning the eccentric housing 29. A change in the tension of the belt b 41, which has been incurred by the distance adjustment, is adjusted by turning the eccentric housing 3.

In addition, a change in the tension of the belt a 40, which has been caused by rotation of the eccentric housing 3, is adjusted using a motor bracket 48. That is, if the tension of the belt a 40 is low, the motor bracket 48 is moved to the left in the figures. In the opposite case, the motor bracket 48 is moved to the right in the figures and then fixed there by means of a fastener bolt 49.

Separately from the above, the tension of the timing belt 42 is adjusted using an idle gear 27.

Consequently, according to the invention, the power transfer is carried out mostly by means of a belt, and the tension adjustment of the belt is required. The tension of the belt a 40 is adjusted by changing the position of the motor bracket 48, and the tension of the belt b 41 is adjusted by means of the eccentric housing 3.

Formed at one side of the pulley c 33 is a pulley d 34. Both are far away from each other to independently rotate without interfering with each other. That is, even if the pulley c 33 rotates, the pulley d 34 does not rotate unless the spline shaft 7 operates.

Formed in the outer circumferential face of the spline shaft 7 is an external spline, and formed in the inner face of the indexing spindle 12 is an internal spline 12a, which is tooth-engaged with the external spline.

In addition, the spline shaft 7 is capable of reciprocating by means of a piston 8 formed at the rear side (to the motor side). The traveling distance is the same as that of the piston 8. Therefore, the spline shaft 7 is capable of being attached to and detached from the indexing spindle 12 so as to transfer or interrupt a rotating power to the indexing spindle 12.

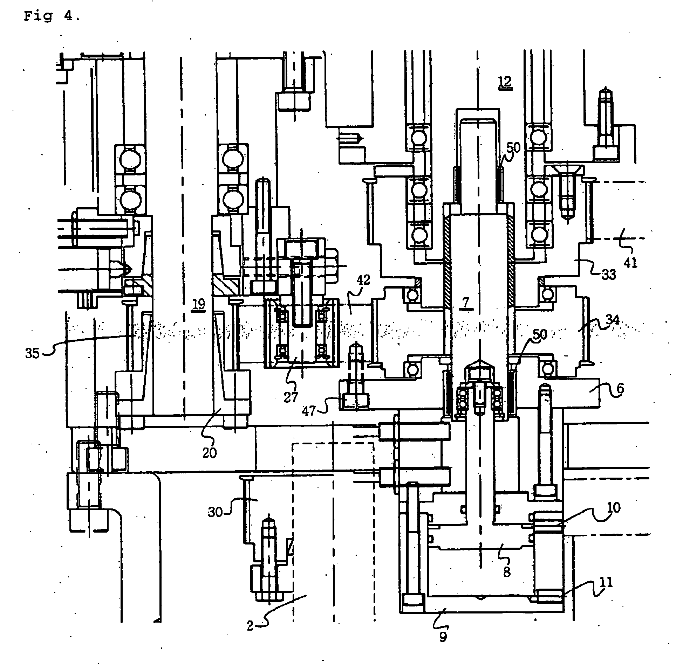

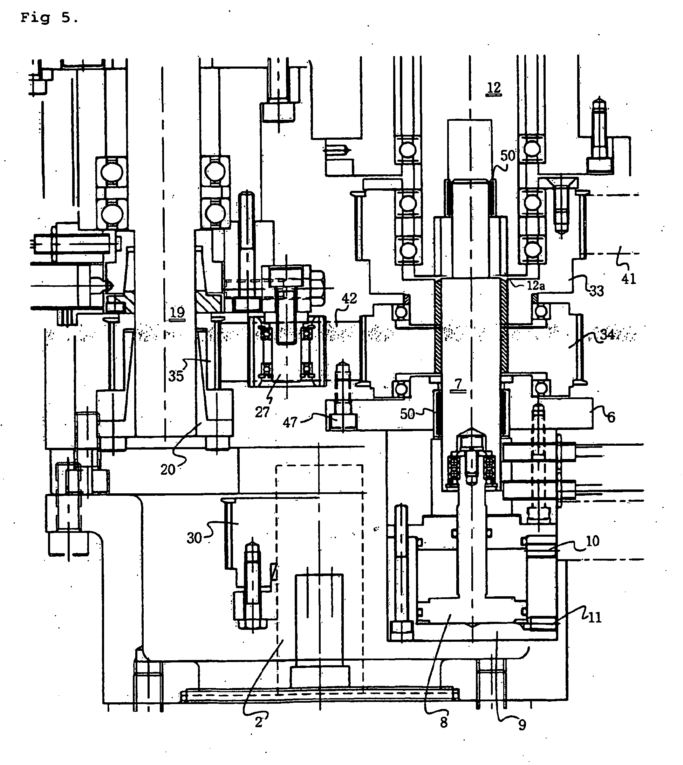

That is, the external spline formed in the spline shaft 7 is formed to the extent of hatched portion in FIGS. 4 and 5. In FIG. 4, the spline shaft 7 has advanced to be tooth-engaged with the internal spline 12a of the indexing spindle 12, but not engaged with the pulley d 34. In FIG. 5, the spline shaft 7 has retracted to be tooth-engaged with the pulley d 34, but not engaged with the indexing spindle 12.

Therefore, the external spline of the spline shaft 7 is always tooth-engaged with the pulley c 33, regardless of the advancement or retraction thereof, to receive a power. However, according to its advancement and retraction, the external spline of the spline shaft repeats tooth-engagement with and release from the pulley d 34. Consequently, if the spline shaft 7 is advanced to be tooth-engaged with a spline formed inside of the indexing spindle 12, the rotating power is transferred towards the indexing spindle 12. On the contrary, if it is retracted to be released from the spline formed inside of the indexing spindle 12, the rotating power is transferred towards the shaft 19.

In other words, where the spline shaft 7 remains retracted, the external spline of the spline shaft 7 is tooth-engaged with the internal spline formed inside of the pulley d 34 and thus the rotating power is being transferred to the pulley d 34. That is, if the rotating power is transferred to the pulley d 34, the pulley e 35 engaged through a timing belt 42 comes to receive the rotating power. Thus, the shaft 19, which is insert-coupled to the pulley e 35 by means of a locking element 20, comes to rotate.

The shaft 19 is provided for transferring a rotating power to the rotating tool 26. The power transferred to the shaft 19 is transferred to a socket 21 formed inside of a gear box 22. The power is transferred to a bevel gear a 23a via the socket 21, and then transferred to the tool driving shaft 25 via a drive shaft b 24, which is insert-coupled to a bevel gear b 23 engaged with the bevel gear a 23a, thereby consequently driving the rotating tool 26.

It is preferable that an idle gear is formed between the pulley d 34 and the pulley e 35. That is, since the pulley d 34 and the pulley e 35 are coupled inside of a body, its center cannot be easily moved. Thus, it is preferable that tension adjustment is performed using the idle gear 27.

The spline shaft 7 needs, in its outside, a component for supporting the spline shaft 7 to avoid trembling during rotation. As shown in the figures, for this purpose, a needle bearing 50 can be formed at the upper and lower portions of the spline shaft 7.

The cylinder 9 is fixed to a cylinder bracket 6, which is fixed to the body by means of a fixing bolt 47.

Hereinafter, operations of the above tool turret according to the invention will be explained.

First, the system through which the rotating power of the motor 1 is transferred to the spline shaft 7 will be described. Rotation of the motor 1 is transferred to the motor shaft 2, and then to the center pulley 30 coupled with the motor shaft 2. The power transferred to the center pulley 30 is transferred to the pulley a 31 by means of the belt a 40. The power transferred to the pulley a 31 is transferred to the drive shaft a 5, then to the pulley b 32, and then to the pulley b 41 through the belt b 41. The power transferred to the pulley c 33 is transferred to the spline shaft 7. At this time, if the spline shaft 7 has advanced, it is coupled to the internal spline formed in the indexing spindle 12. If the spline shaft 7 has retracted, it is coupled to the internal spline formed in the pulley d 34.

The spline shaft 7 is advanced or retracted by a piston 8. If a pneumatic pressure (air pressure) is applied to a first flow passageway 10, the spline shaft 7 is retracted towards the motor. On the contrary, if a pneumatic pressure is applied to a second flow passageway 11, the spline shaft 7 is advanced toward the indexing spindle 12.

As described above, as the spline shaft 7 is advanced or retracted, a tool driving and a tool replacement are selectively carried out. First, the tool replacement will be described. The spline shaft 7 rotates the indexing spindle 12 and the pinion gear 13 coupled to the indexing spindle 12 comes to rotate. The rotating power is transferred to the pivotable curvic coupling 14, which is tooth-engaged with the pinion gear 13. Then, the disk flange 28 coupled to the pivotable curvic coupling 14 comes to rotate. The disk 4 is also coupled to the disk flange 28 and thus comes to rotate such that a tool replacement can be performed.

Here, the distance adjustment between the pinion gear 13 and the pivotable curvic coupling 14 is carried out by another eccentric housing 29, thereby enabling to be assembled at an optimum position capable of providing for a solid engagement and reduced noises.

The tool driving operation will be explained. The spline shaft 7 rotates the pulley d 34. The power transferred to the pulley d 34 is transferred to the pulley e 35 by means of the timing belt 42 to thereby rotate the shaft 19. Consequently, the power transferred to the shaft 19 is transferred towards the rotating tool 26 via the gear box 22, as described above.

The major features of the invention are as follows. The pulley a 31 is formed in the motor shaft 2 formed in the motor 1 and the drive shaft a 5 to transfer the power by means of the belt a 40. Another pulley b 32 is formed at the other side of the drive shaft a 5. The pulley c 33 receives the power from the pulley b 32 through the belt b 41. Formed at one side of the pulley c 33 is the pulley d 34 for transferring the power to the shaft 19 for tool driving. The internal spline is formed in the indexing spindle 12 formed at one side of the pulley d 34. The spline shaft 7 reciprocates along the pulley c 33, the pulley d 34 and the spline formed inside of the indexing spindle 12. The power is transferred or interrupted by means of forward and backward reciprocal movement of the spline shaft 7.

In addition, when the spline shaft 7 advances to be tooth-engaged to the spline formed in the indexing spindle 12, a tool replacing state is obtained. When the spline shaft 7 retracts to be tooth-engaged to the spline formed in the pulley d 34, a tool driving state is obtained.

Furthermore, the engagement between the pivotable curvic coupling 14 and the pinion gear 13 is adjusted by means of the eccentric housing 29. The tension of the belt b 41 is adjusted using another eccentric housing 3. The tension of the belt a 40 is adjusted by controlling the position of the motor bracket 48. That is, the belt tensions and the distances between the gears can be finely adjusted using the eccentric housings 3 and 29.

As described above, in the tool turret according to the invention, the power transfer system of the motor is formed mostly of belts, thereby enabling to reduce noises of the tool turret and to save the assembling time and cost.

Further, instead of a pinion gear used in the conventional circular motor type tool turret, a spline shaft having a spline is formed to thereby enable to transfer the power in more smooth way.

While the present invention has been described with reference to the particular illustrative embodiment, it is not to be restricted by the embodiment but only by the appended claims.

## Claims

1. A belt type tool turret comprising: a motor (1) for generating a driving force and having a motor shaft (2) formed therein; a center pulley (30) connected to the motor shaft (2); a pulley a (31) which is connected with the center pulley (30) by means of a belt a (40) and to which the motor (1) power is transferred; a drive shaft a (5) rotatably coupled to the pulley a (31) and **characterized by** a first eccentric housing (3) formed at the outside of the drive shaft a (5) so as to have a certain degree of eccentricity; a pulley b (32) coupled to one side of the drive shaft a (5); a pulley c (33) connected with the pulley b (32) through a belt b (41) to transfer a power, the pulley c (33) having a spline formed therein; a pulley d (34) formed at one side of the pulley c (33) and having a spline formed therein; a spline shaft (7) adapted to pass through the pulley c (33) and the pulley d (34) to enable a reciprocal movement; a piston (8) and a cylinder (9) for carrying out the reciprocal movement of the spline shaft (7); an indexing spindle (12) pivoted by the spline shaft (7) having a pinion gear (13) formed therein; a second eccentric housing (29) formed at the outside of the indexing spindle (12) so as to have a certain degree of eccentricity; a tool replacement driver unit for transferring the power transferred to the indexing spindle (12) to a disk (4); a pulley e (35) for transferring a power transferred to the pulley d (34) to a timing belt (42); a shaft (19) coupled to the pulley e (35) by means of a locking element (20); and a rotating tool driver unit for transferring a power transferred to the shaft (19) to a rotating tool (26).

2. The belt type tool turret according to claim 1, wherein the tool replacement driver unit is configured to transfer a driving power to the disk (4) for the purpose of tool-replacement, except that the power generated from the motor (1) is transferred to the rotating tool driver unit (60) in the same manner, the tool replacement driver unit including: a pivotable curvic coupling (14) which is gear-engaged with a pinion gear (13) and to which a power is transferred; a disk flange (28) fixedly coupled to the pivotable curvic coupling (14) by means of a bolt (43); a disk (4) fixedly coupled to the disk flange (28) by means of another bolt (44); and a fixing curvic coupling and a piston curvic coupling (16) for fixing the disk (4) to prevent the disk from rotating.

3. The belt type tool turret according to claim 1 or 2, wherein the rotating tool driver unit is configured to transfer a driving power to a rotating tool (26) for the purpose of driving the rotating tool (26), except that the power generated from the motor (1) is transferred to the tool replacement driver unit in the same way, the rotating tool driver unit including: a socket (21) coupled to a key groove of a shaft (19); a bevel gear a (23a) coupled to the socket (21) by means of a bolt (45); a bevel gear b (23b) pairing with the bevel gear a (23a); a drive shaft b (24) installed by passing through the bevel gear b (23b); and a tool driving shaft (25) for receiving a power by the drive shaft b (24) and transferring the power to a rotating tool (26).

4. The belt type tool turret according to any of the preceding claims 2 - 3, wherein the engagement between the pivotable curvic coupling (14) and the pinion gear (13) is adjusted using the second eccentric housing (29), the tension of the belt b (41) is adjusted using the first eccentric housing (3), and the tension of the belt a (40) is adjusted by adjusting the position of a motor bracket (48).

5. The belt type tool turret according to any of the preceding claims, wherein the pulley a (31) is formed in the motor shaft (2) formed in the motor (1) and the drive shaft a (5) to transfer the power by means of the belt a (40), another pulley b (32) is formed at the other side of the drive shaft a (5), the pulley c (33) receives the power from the pulley b (32) through the belt b (41), the pulley d (34) for transferring the power to the shaft (19) for tool driving is formed at one side of the pulley c (33), the internal spline is formed in the indexing spindle (12) formed at one side of the pulley d (34), the spline shaft (7) reciprocates along the pulley c (33), the pulley d (34) and the spline formed inside of the indexing spindle (12), and the power is transferred or interrupted by means of forward and backward reciprocal movement of the spline shaft (7).

6. The belt type tool turret according to any of the preceding claims, wherein when the spline shaft (7) advances to be tooth-engaged to the spline formed in the indexing spindle (12), a tool replacing state is obtained, and when the spline shaft (7) retracts to be tooth-engaged to the spline formed in the pulley d (34), a tool driving state is obtained.

## Patentansprüche

1. Werkzeugrevolver einer Gurtart, umfassend:
einen Motor (1) zum Erzeugen einer Antriebskraft, der eine Motorwelle (2) aufweist, die in ihm ausgebildet ist; ein Zentrumsrad (30), das mit der Motorwelle (2) verbunden ist; ein Rad a (31), das mit dem Zentrumsrad mittels eines Gurts a (40) verbunden ist und zu dem die Leistung des Motors (1) übertragen wird; eine Antriebswelle a (5), die drehbar mit dem Rad a (31) gekoppelt ist,
**gekennzeichnet durch**
ein erstes exzentrisches Gehäuse (3), das so an der Außenseite der Antriebswelle a (5) ausgebildet ist, dass es einen gewissen Grad an Exzentrizität aufweist; ein Rad b (32), das mit einer Seite der Antriebswelle a (5) gekoppelt ist; ein Rad c (33), das **durch** einen Gurt b (41) mit dem Rad b (32) verbunden ist, um Leistung zu übertragen, wobei in dem Rad c (33) ein Keilprofil ausgebildet ist; ein Rad d (34), das an einer Seite des Rads c (33) ausgebildet ist und in das ein Keilprofil ausgebildet ist; eine Keilwelle (7), die eingerichtet ist um **durch** das Rad c (33) und das Rad d (34) hindurchzugelangen, um eine gegenseitige Bewegung zu ermöglichen; einen Kolben (8) und einen Zylinder 9 zum Ausführen der gegenseitigen Bewegung der Keilwelle (7); eine intermittierende Spindel (12), die mittels der Keilwelle (7) gedreht wird und in die ein Ritzel ausgebildet ist; ein zweites exzentrisches Gehäuse (29), das so an der Außenseite der intermittierenden Spindel (12) ausgebildet ist, dass es einen gewissen Grad an Exzentrizität aufweist; eine Werkzeugersatzantriebseinheit zum Übertragen der an die intermittierende Spindel (12) übertragenen Leistung an eine Scheibe (4); ein Rad e (35) zum Übertragen der an das Rad d (34) übertragenen Leistung an einen Zahnriemen (42); eine Welle (19), die an das Rad e (35) mittels eines Sperrelements (20) gekoppelt ist; und eine rotierende Werkzeugantriebseinheit zum Übertragen einer an die Welle übertragenen Leistung an ein drehendes Werkzeug (26).

2. Werkzeugrevolver einer Gurtart nach Anspruch 1, bei dem die Werkzeugersatzantriebseinheit eingerichtet ist, um eine Antriebsleistung für den Zweck des Werkzeug-Ersetzens an die Scheibe(4) zu übertragen, ausgenommen dass die vom Motor erzeugte Leistung an die rotierende Werkzeugantriebseinheit (60) in derselben Weise übertragen wird, wobei die Werkzeugersatzantriebseinheit umfasst: eine drehbare, geschweifte Kupplung (14), welche mit einem Ritzel (13) in Zahneingriff ist und an die eine Leistung übertragen wird; einen Scheibenflansch (28), der fest mit der drehbaren, geschweiften Kupplung (14) mittels eines Bolzens (43) gekoppelt ist; eine Scheibe (4), die fest mit dem Scheibenflansch (28) mittels eines anderen Bolzens (44) gekoppelt ist; und eine geschweifte Befestigungskupplung und eine geschweiften Kolbenkupplung (16) zum Befestigen der Scheibe (4), so dass die Scheibe am Rotieren gehindert wird.

3. Werkzeugrevolver einer Gurtart nach Anspruch 1 oder 2, bei dem die sich drehende Werkzeugantriebseinheit eingerichtet ist, um eine Antriebsleistung an ein sich drehendes Werkzeug (26) für den Zweck des Antreibens des sich drehenden Werkzeugs (26) zu übertragen, ausgenommen dass die vom Motor (1) erzeugte Leistung an die Werkzeugersatzantriebseinheit in derselben Weise übertragen wird, wobei die sich drehende Werkzeugantriebseinheit umfasst: eine Buchse (21), die mit einer Passnut einer Welle (19) gekoppelt ist; ein Kegelrad a (23a), das mit der Buchse (21) mittels eines Bolzens (45) gekoppelt ist; ein Kegelrad b (23b), das sich mit dem Kegelrad a (23a) paart; eine Antriebswelle b (24), die mittels hindurchgehen durch das Kegelrad b (23b) installiert ist; und eine Werkzeugantriebswelle (25) zum Aufnehmen von Leistung durch die Antriebswelle b (24) und zum Übertragen der Leistung auf ein rotierendes Werkzeug (26).

4. Werkzeugrevolver einer Gurtart nach einem der vorhergehenden Ansprüche 2 - 3, bei dem der Eingriff zwischen der drehbaren, geschweiften Kupplung (14) und dem Ritzel (13) mittels Verwendung des zweiten exzentrischen Gehäuses (29) eingestellt wird, wobei die Spannung des Gurts b (41) durch Verwendung des ersten exzentrischen Gehäuses (3) eingestellt wird, und wobei die die Spannung des Gurts a (40) durch Einstellen einer Position eines Motorträgers (48) eingestellt wird.

5. Werkzeugrevolver einer Gurtart nach einem der vorhergehenden Ansprüche, bei dem das Rad a (31) in der Motorwelle (2), die in dem Motor (1) ausgebildet ist, und die Antriebswelle a (5) ausgebildet ist, um mittels des Gurts a (40) die Leistung zu übertragen, ein anderes Rad b (32) an der anderen Seite der Antriebswelle a (5) ausgebildet ist, wobei das Rad c (33) die Leistung des Rads b (32) durch den Gurt b (41) aufnimmt, das Rad d (34) zum Übertragen der Leistung an die Welle (19) für den Werkzeugantrieb an einer Seite des Rads c (33) ausgebildet ist, das innere Keilprofil in der intermittierenden Spindel (12) ausgebildet ist, die an einer Seite des Rads d (34) ausgebildet ist, die Spindelwelle (7) sich entlang des Rads c (33) hin- und herbewegt, und die Leistung mittels einer Vorwärts- und Rückwärtsbewegung der Spindelwelle (7) übertragen oder unterbrochen wird.

6. Werkzeugrevolver einer Gurtart nach einem der vorhergehenden Ansprüche, bei dem, wenn die Spindelwelle (7) mit der Spindel, die in die intermittierende Spindel (12) ausgebildet ist, weiter in einen Zahneingriff gelangt, ein Werkzeugersatzzustand erhalten wird, und wenn sich die Spindelwelle (7) aus dem Zahneingriff mit der Spindel, die in das Rad d (34) ausgebildet ist, zurückzieht, ein Werkzeugantriebszustand erhalten wird.

## Revendications

1. Tourelle porte-outil du type à courroie comprenant: un moteur (1) pour générer une force d'entraînement et ayant un arbre de moteur (2) qui y est formé; une poulie centrale (30) reliée à l'arbre de moteur (2); une poulie a (31) qui est reliée à la poulie centrale (30) au moyen d'une courroie a (40) et à laquelle la puissance du moteur (1) est transférée; un arbre d'entraînement a (5) couplé de manière rotative à la poulie a (31) et **caractérisé par** un premier logement excentrique (3) formé à l'extérieur de l'arbre d'entraînement a (5) de manière à avoir un certain degré d'excentricité; une poulie b (32) couplée à un côté de l'arbre d'entraînement a (5); une poulie c (33) reliée à la poulie b (32) à travers une courroie b (41) pour transférer la puissance, la poulie c (33) ayant une cannelure qui y est formée; une poulie d (34) formée au niveau d'un côté de la poulie c (33) et ayant une cannelure qui y est formée; un arbre cannelé (7) adapté pour passer à travers la poulie c (33) et la poulie d (34) pour permettre un mouvement de va-et-vient; un piston (8) et un cylindre (9) pour mettre en oeuvre le mouvement de va-et-vient de l'arbre cannelé (7); une fusée d'amenage (12) pivotée par l'arbre cannelé (7) ayant un engrenage à pignons (13) qui y est formé; un deuxième logement excentrique (29) formé à l'extérieur de la fusée d'amenage (12) de manière à avoir un certain degré d'excentricité; une unité d'entraînement de remplacement d'outil pour transférer la puissance transférée à la fusée d'amenage (12) vers un disque (4); une poulie e (35) pour transférer une puissance transférée à la poulie d (34) vers une courroie de synchronisation (42); un arbre (19) couplé à la poulie e (35) au moyen d'un élément de verrouillage (20); et une unité d'entraînement d'outil rotatif pour transférer une puissance transférée à l'arbre (19) vers un outil rotatif (26).

2. Tourelle porte-outil du type à courroie selon la revendication 1, dans laquelle l'unité d'entraînement de remplacement d'outil est configurée pour transférer une puissance d'entraînement vers le disque (4) afin de remplacer l'outil, sauf que la puissance générée par le moteur (1) est transférée à l'unité d'entraînement (60) d'outil rotatif de la même manière, l'unité d'entraînement de remplacement d'outil incluant: un accouplement (14) à denture trapézoïdale qui pivote qui est engagé par engrenage avec un engrenage à pignons (13) et auquel une puissance est transférée; une bride de disque (28) couplée de manière fixe à l'accouplement (14) à denture trapézoïdale qui pivote au moyen d'un boulon (43); un disque (4) couplé de manière fixe à la bride de disque (28) au moyen d'un autre boulon (44); et un accouplement à denture trapézoïdale de fixation et un accouplement (16) à denture trapézoïdale de piston pour fixer le disque (4) afin d'éviter que le disque ne pivote.

3. Tourelle porte-outil du type à courroie selon la revendication 1 ou 2, dans laquelle l'unité d'entraînement d'outil rotatif est configurée pour transférer une puissance d'entraînement vers un outil rotatif (26) dans le but d'entraîner l'outil rotatif (26), sauf que la puissance générée à partir du moteur (1) est transférée vers l'unité d'entraînement de remplacement d'outil de la même manière, l'unité d'entraînement d'outil rotatif incluant: un support (21) couplé à un logement de clavette d'un arbre (19); un engrenage conique a (23a) couplé au support (21) au moyen d'un boulon (45); un engrenage conique b (23b) en appariement avec l'engrenage conique a (23a); un arbre d'entraînement b (24) installé en passant à travers l'engrenage conique b (23b); et un arbre d'entraînement (25) d'outil pour recevoir une puissance par l'arbre d'entraînement b (24) et transférer la puissance à un outil rotatif (26).

4. Tourelle porte-outil du type à courroie selon l'une des revendications précédentes 2 - 3, dans laquelle l'engagement entre l'accouplement (14) à denture trapézoïdale qui pivote et l'engrenage à pignons (13) est ajusté en utilisant le deuxième logement excentrique (29), la tension de la courroie b (41) est ajustée en utilisant le premier logement excentrique (3), et la tension de la courroie a (40) est ajustée en ajustant la position d'un support (48) du moteur.

5. Tourelle porte-outil du type à courroie selon l'une des revendications précédentes, dans laquelle la poulie a (31) est formée dans l'arbre de moteur (2) formé dans le moteur (1) et l'arbre d'entraînement a (5) pour transférer la puissance au moyen de la courroie a (40), une autre poulie b (32) est formée au niveau de l'autre côté de l'arbre d'entraînement a (5), la poulie c (33) reçoit la puissance provenant de la poulie b (32) à travers la courroie b (41), la poulie d (34) pour transférer la puissance à l'arbre (19) pour un entraînement d'outil est formée au niveau d'un côté de la poulie c (33), la cannelure interne est formée dans la fusée d'amenage (12) formée au niveau d'un côté de la poulie d (34), l'arbre cannelé (7) est animé d'un mouvement de va-et-vient le long de la poulie c (33), la poulie d (34) et la cannelure formée à l'intérieur de la fusée d'amenage (12), et la puissance est transférée ou interrompue au moyen d'un mouvement de va-et-vient vers l'avant et vers l'arrière de l'arbre cannelé (7).

6. Tourelle porte-outil du type à courroie selon l'une des revendications précédentes, dans laquelle lorsque l'arbre cannelé (7) est avancé de manière à s'engager par dent à la cannelure formée dans la fusée d'amenage (12), un état de remplacement d'outil est obtenu, et lorsque l'arbre cannelé (7) est rétracté de manière à être engagé par dent à la cannelure formée dans la poulie d (34), un état d'entraînement d'outil est obtenu.
